# FASCICULE DE BREVET EUROPEEN

(11) **EP 0 991 533 B1**
(45) Date de publication et mention de la délivrance du brevet: **21.11.2001**
(21) Numéro de dépôt: 98929275.0
(22) Date de dépôt: 30.04.1998
(51) Int. Cl.: B60C 25/00

(54) **PROCEDE D'ASSEMBLAGE D'ENSEMBLES MONTES**
VERFAHREN ZUR MONTAGE VON BAUGRUPPEN
METHOD FOR ASSEMBLING MOUNTED ASSEMBLIES

(30) Priorité: 25.06.1997 FR 9708077
(43) Date de publication de la demande: 12.04.2000
(73) Titulaire: Compagnie Générale des Etablissements MICHELIN-MICHELIN & CIE, 63040 Clermont-Ferrand Cedex 09 (FR)
(72) Inventeur: MENARD, Bernard, F-35580 Guichen (FR); PATURE, Frédéric, F-35480 Saint-Malo-de-Phily (FR); PITOU, Jacques, F-57365 Ennery (FR)
(74) Mandataire: Devaux, Edmond-Yves
(86) Numéro de dépôt international: EP9802551
(87) Numéro de publication internationale: WO9900262

(56) Documents cités:
- US-A- 4 504 919

## Description

L'invention concerne une ligne ou chaîne d'assemblage de pneumatiques à leurs roues de montage, en vue d'obtenir des ensembles montés prêts à être livrés en temps voulu aux clients qui sont généralement des constructeurs de véhicules automobiles. Elle concerne plus particulièrement le système de gestion informatique de production et de livraison des ensembles montés.

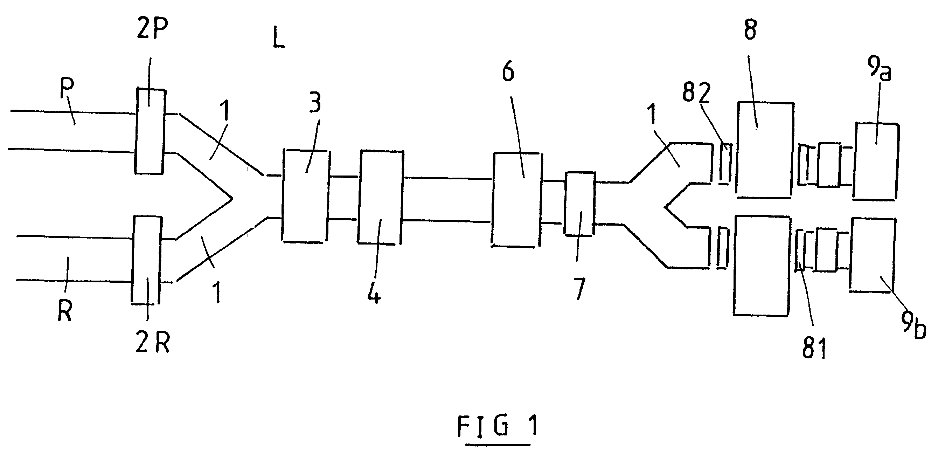

Une telle ligne ou chaîne d'assemblage L (figure 1) comporte de manière connue, par exemple par le document US-A-4.504.919, des bandes ou courroies transporteuses ou des rouleaux métalliques de convoyage (1) permettant l'acheminement des pneumatiques P, des roues R, et des ensembles montés E d'un point à un autre de la chaîne de montage, lesdits pneumatiques et lesdites roues provenant d'un magasin d'approvisionnement (2) par des moyens de transport adaptés. Chaque roue R et chaque pneumatique P, après avoir été centrés sur leurs dispositifs de convoyage (1) respectifs, sont lubrifiés dans des postes de lubrification (2_{P} et 2_{R}) pour faciliter, comme connu en soi, le montage du pneumatique, qui s'effectue à l'aide d'une machine de montage ou monteuse (3), les deux bourrelets étant mis en place dans la gorge de montage par des bras presseurs et un galet rotatif. Un moyen de gonflage (4), par exemple, une cloche de gonflage, permet l'introduction du gaz de gonflage de l'ensemble monté E. Ledit ensemble monté E, équilibré sur une machine d'équilibrage (7) est alors convoyé sur un tapis à rouleaux (1) vers un magasin de stockage (8), composé de plusieurs couloirs gravitaires (80), d'où il sera prélevé à l'aide de mobiles (81) pour être disposé dans une unité de livraison (9a, 9b) au(x) constructeur(s) de véhicules.

Ladite livraison est faite actuellement en fonction des commandes journalières successives du ou des constructeurs, d'où la naissance de lignes de montage et de magasins de stockage dits avancés, c'est-à-dire proches de la chaîne de montage du constructeur, de façon à pouvoir livrer en synchrone l'ensemble monté E à l'unité de production de véhicules; c'est-à-dire livrer l'ensemble monté destiné à un véhicule donné, tel que ce dernier puisse être équipé à un temps donné, temps déterminé par la cinématique de la chaîne d'assemblage des véhicules.

Il est d'usage de fournir aussi et simultanément des ensembles montés à plusieurs constructeurs de véhicules, un seul ou plusieurs devant être livrés en synchrone, et ce à partir de la même ligne d'assemblage d'ensembles montés. Il est aussi courant dans tout processus industriel digne de ce nom de prévoir les risques d'arrêt de production quelles qu'en soient les causes, et de prévoir en conséquence des stocks d'ensembles montés de secours, le problème étant d'être capable à tout instant de pouvoir honorer les commandes de client(s) dans un laps de temps donné.

Afin d'atteindre lesdits objectifs et conformément à l'invention, la ligne de production et de livraison d'ensembles montés, composés chacun d'un pneumatique et de sa roue de service, comprenant principalement des moyens d'acheminement des pneumatiques et des roues, des moyens d'assemblage des pneumatiques sur leurs roues, des moyens de contrôle et de stockage d'ensembles montés E, des lignes et des unités de livraison desdits ensembles, est caractérisée en ce que, pour livrer en synchrone des ensembles à au moins un constructeur de véhicules, elle comprend en outre un ensemble de moyens informatiques composé d'au moins :
a) un ordinateur permettant de créer et mémoriser un fichier de commandes en provenance du(des) constructeur(s) (liaison a),
b) un automate programmable pour la gestion des automatismes de chargement des unités de livraison selon une cartographie mémorisée, et questionnant
c) un automate programmable de gestion des moyens de stockage, gouvernant l'entrée et la mise en place des ensembles après mémorisation de l'ordonnancement desdits moyens et gouvernant leur sortie vers les lignes de chargement (liaison e),
d) un ordinateur principal comportant, comme connu en soi, plusieurs unités dont une unité d'entrée de données, une unité de mémorisation à plusieurs fichiers, une unité de contrôle numérique effectuant plusieurs opérations de traitement et une unité de sortie, ledit ordinateur permettant :
   * la saisie des données sur les mouvements d'entrée et de sortie des moyens de stockage (liaison f),
   * le traitement desdites données, ainsi que les transferts de traitement des données du(des) constructeur(s) en les vérifiant, les modifiant, les ordonnançant (liaison b),
   * la mémorisation des dites données constructeur, des données relatives aux disponibilités des moyens de stockage, ainsi que celles relatives à la constitution du stock de roulement,
   * la constitution et la transmission de la carte de remplissage des unités de livraison (liaison c),
   * le traitement, l'organisation et le déclenchement de la production nécessaire (liaisons h, k),
   * l'ordonnancement des moyens de stockage, et
   * le transfert vers les automates de gestion de chargement et de gestion de moyens de stockage (liaison g).

De manière avantageuse, la ligne de production et de livraison comprend en outre et après les moyens de gonflage du pneumatique, une machine de mise en place des talons, permettant, par application d'une pression sur les flancs du pneumatique gonflé à une pression donnée, un déplacement des talons et leur repositionnement sous l'effet de la pression interne de gonflage.

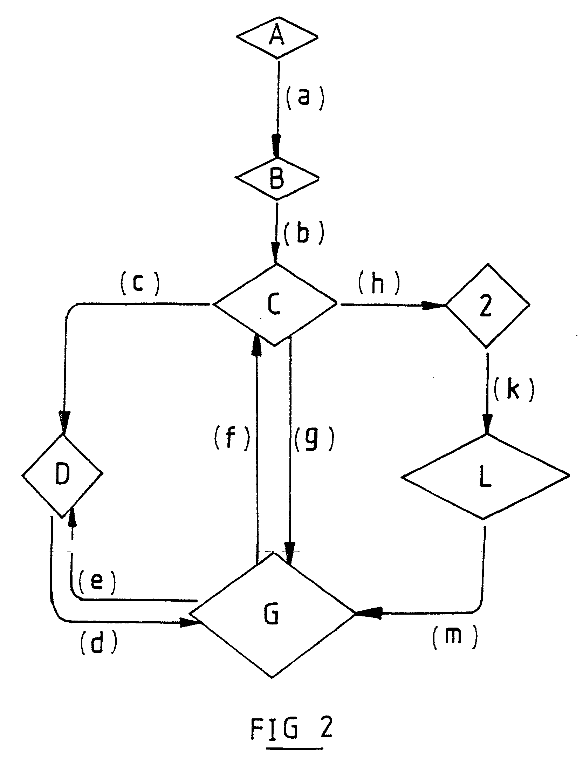

Les caractéristiques et avantages de l'invention seront mieux compris à l'aide de la description qui suit et des figures 1 et 2 qui s'y réfèrent, montrant les différentes étapes du procédé ainsi que les moyens destinés au déroulement correct desdites étapes.

Une liaison (a) par modem à l'ordinateur principal A du constructeur de véhicules permet de créer sur un ordinateur de faible puissance B un fichier de données concernant les caisses de véhicule au moment de leur arrivée sur la chaîne d'assemblage, ces données concernant la date et l'heure d'arrivée de la caisse sur la chaîne, le numéro d'enlignement du véhicule, le badge dudit véhicule, la référence du constructeur des ensembles montés pour ce véhicule et selon les deux types : roues principales R1 et roue de secours R2. Lesdites informations, relatives à chaque véhicule devant être assemblé, peuvent concerner et concernent généralement plusieurs lignes d'assemblage et différents types de véhicules sur une même ligne.

Transférées (liaison b) sur un ordinateur principal C, lesdites données sont, à l'aide d'un logiciel approprié mis en oeuvre sur ledit ordinateur C, d'abord vérifiées : on vérifie, par exemple, que les commandes en provenance du constructeur sont bien dans l'ordre chronologique, que la correspondance entre les références d'ensembles montés du constructeur et le type du véhicule est correcte, que les numéros d'enlignement des véhicules sont croissants, que le numéro informatique attribué à chaque véhicule correspond aux cinq ensembles montés : les quatre ensembles principaux et l'ensemble de secours. Les données sont ensuite modifiées pour correspondre aux références du fournisseur d'ensembles montés, et ordonnancées : on sépare les commandes globales du constructeur en commandes pour chaque chaîne de montage, en commandes pour les côtés droit et gauche respectivement et la roue de secours des véhicules, et ce dans l'ordre d'enlignement des véhicules sur la chaîne du constructeur.

Les informations sont ensuite classées par paquets de 80 ensembles montés, c'est-à-dire pour l'équipement de 16 véhicules avec 64 ensembles principaux et 16 ensembles de secours, lesdits 64 ensembles devant être répartis pour la livraison au constructeur en 32 ensembles disposés dans une première unité ou container de livraison pour le côté gauche de la chaîne de montage du constructeur, et 32 ensembles disposés dans un deuxième container pour le côté droit, un des deux containers prenant aussi les 16 roues de secours.

Les besoins étant parfaitement définis en type d'ensemble, en quantité, en ordonnancement et en temps, l'ordinateur principal est relié (liaison c) par un premier réseau industriel à l'automate programmable D des lignes de chargement (81) des unités ou containers de livraison (9), afin de leur transmettre la carte des 80 ensembles montés correspondants à la livraison qui suit le chargement en cours : on entend par carte la loi ou le schéma de remplissage des deux containers (9) nécessaires, loi contenant toutes les informations utiles au chargement et respectant scrupuleusement les données du constructeur relatives au besoin d'ensembles correspondant à l'ordre de passage sur la chaîne de montage des véhicules.

L'automate D des lignes de chargement interroge (liaison d) alors l'automate programmable G de stockage ou automate de gestion du magasin (8), sur les quantités disponibles des références ou codes d'ensembles montés, nécessaires à la livraison. Ledit magasin (8) est composé de deux ensembles ou stocks fonctionnels (8a, 8b), chaque ensemble contenant 96 couloirs gravitaires (80) à rouleaux convoyeurs (les ensembles montés E sont véhiculés par gravité), et chaque couloir pouvant emmagasiner 12 ensembles montés E identiques. L'automate G de gestion du magasin répond positivement ou négativement à l'automate D des lignes de chargement, et dans le cas d'une réponse positive organise et met en oeuvre le passage des ensembles demandés du magasin aux lignes de chargement (liaison e) à l'aide de mobiles de chargement (81) et en respectant le schéma de remplissage des unités de livraison (9).

Quelle que soit la réponse de l'automate G de stockage, tout mouvement de sortie du magasin (8), relatif à un ensemble donné est transféré, mémorisé et traité (liaison f) par le logiciel de traitement de l'ordinateur principal C qui, en fonction des places alors disponibles dans ledit magasin (8), de la capacité dudit magasin, de la demande du(des) constructeur(s) livré(s) en synchrone pour un produit donné, traite, calcule et organise les campagnes de fabrication nécessaires à la satisfaction de telles demandes.

Les campagnes de production d'ensembles montés peuvent être de trois sortes :
- les campagnes dites d'ordonnancement faisant suite à une réponse négative de l'automate de gestion du magasin sur la disponibilité des ensembles demandés,
- les campagnes de renouvellement consistant à renouveler les ensembles consommés et à conserver un nombre d'ensembles suffisant à la constitution d'un stock dit "tampon, ledit stock prenant en compte les prévisions du nombre d'ensembles nécessaires pour chaque jour de fabrication de véhicules,
- les campagnes spécifiques, campagnes de fabrication de produits qu'il n'est pas nécessaire de livrer en synchrone et campagnes de fabrication de produits destinés à la conservation en nombre et en type des ensembles d'un stock dit de sécurité ou de secours, susceptibles d'être utilisés en cas de force majeure.

Seules les campagnes d'ordonnancement et les campagnes dites de renouvellement sont gérées, dans le cas décrit, par système informatique dans leur intégralité. Les campagnes spécifiques et les campagnes en vue de la conservation constante du stock de secours ne sont pas traitées de la même manière que précédemment en ce sens que les données nécessaires à la réalisation des ensembles voulus sont insérées dans le système manuellement.

Quel que soit l'intitulé de la campagne de production, le système principal organise les campagnes par nombre de cinq, en fonction de l'urgence des besoins, les campagnes d'ordonnancement étant prioritaires par rapport aux deux autres campagnes et les campagnes spécifiques l'étant par rapport aux campagnes de renouvellement.

Les campagnes de fabrication d'ensembles étant précisément définies par les codes du fournisseur d'ensembles, le nombre et codes ou références correspondants des pneumatiques et des roues nécessaires sont transférées par un deuxième réseau (liaison h) au magasin d'approvisionnement (2) en composants, que sont les pneumatiques P et roues R, afin d'alimenter (liaison k) les rouleaux convoyeurs (1) véhiculant ces produits vers le dispositif de montage (3) et dispositifs annexes de la ligne d'assemblage des ensembles montés E.

La gestion des besoins en composants peut être manuelle, les campagnes de production à venir étant simplement affichées électroniquement dans le magasin (8) de composants à l'intention de caristes, chargés de transporter les palettes de composants nécessaires. Elle peut être aussi informatique depuis la sortie des magasins de fournisseurs de composants P et R, pouvant être de marques différentes que ce soient les roues ou les pneumatiques, jusqu'à la livraison à l'atelier d'assemblage du fournisseur d'ensembles montés E avec possibilité de livraison en synchrone desdits composants pour la mise en oeuvre des campagnes de montage prévues sur la ligne d'assemblage.

Le montage des ensembles montés E étant réalisé, chaque ensemble, selon la campagne dont il fait partie est alors transféré soit vers le magasin de secours où les ensembles sont stockés sur des palettes appropriées, soit vers un magasin de livraison non synchrone où les ensembles sont aussi stockés sur des palettes, soit vers le magasin (8) à couloirs gravitaires (80) (liaison m) dont l'automate G gouverne le fonctionnement des mobiles d'entrée (82) en magasin pour placer chaque ensemble monté E dans le couloir gravitaire (80) prévu par ledit automate G, l'ordonnancement du magasin (8) ayant été organisé par l'ordinateur principal C et transféré à l'automate G (liaison g). Pour fermer la boucle, toutes les informations relatives à cette entrée en magasin sont transférées (liaison f) à l'ordinateur principal C.

## Revendications

1. Ligne de production et de livraison d'ensembles montés E, composés chacun d'un pneumatique P et de sa roue R de service, comprenant principalement des moyens d'acheminement (1) des pneumatiques P et des roues R, des moyens d'assemblage (2, 3, 4) des dits pneumatiques sur leurs roues, des moyens de contrôle (7) et de stockage (8) d'ensembles montés E, des lignes (81) et des unités de livraison (9) des dits ensembles, **caractérisée en ce que**, pour livrer en synchrone des ensembles E à au moins un constructeur de véhicules, elle comprend en outre un ensemble de moyens informatiques composé d'au moins :
a) un ordinateur B permettant de créer et mémoriser un fichier de commandes en provenance du(des) constructeurs (liaison a),
b) un automate programmable D pour la gestion des automatismes de chargement des unités de livraison (9) selon une cartographie mémorisée, et questionnant
c) un automate programmable G de gestion des moyens de stockage (8), gouvernant l'entrée et la mise en place des ensembles E après mémorisation de l'ordonnancement des dits moyens (8) et gouvernant leur sortie vers les lignes de chargement (81) (liaison e),
d) un ordinateur principal C comportant ,comme connu en soi, plusieurs unités dont une unité d'entrée de données, une unité de mémorisation à plusieurs fichiers, une unité de contrôle numérique effectuant plusieurs opérations de traitement et une unité de sortie, ledit ordinateur permettant :
* la saisie des données sur les mouvements d'entrée et de sortie des moyens de stockage (8) (liaison f),
* le traitement des dites données, ainsi que les transfert et traitement des données du(des) constructeurs en les vérifiant, les modifiant, les ordonnançant (liaison b),
* la mémorisation de ces données constructeur, des données relatives aux disponibilités des moyens de stockage (8), ainsi que celles relatives à la constitution du stock de roulement,
* la constitution et la transmission de la carte de remplissage aux unités de livraison (9)(liaison c),
* le traitement, l'organisation et le déclenchement de la production nécessaire (liaisons h, k),
* l'ordonnancement des moyens de stockage (8), et
* le transfert vers les automates de gestion de chargement D et de gestion G de moyens de stockage (8) (liaison g).

2. Ligne de production et de livraison selon la revendication 1, **caractérisée en ce qu'**elle comprend en outre une machine (6) de mise en place des talons, permettant, par application d'une pression sur les flancs du pneumatique gonflé à une pression donnée, un déplacement des talons et leur repositionnement sous l'effet de la pression interne de gonflage.

3. Système de gestion informatique, par un système d'ordinateurs et d'automates dédiés, de la production et livraison d'ensembles pneumatique/roue, **caractérisé en ce que**,
* les commandes en provenance du(des constructeur(s) sont transférées (liaison a) dans un fichier sous un format normalisé,
* lesdites données récupérées étant transmises à (liaison b), et vérifiées, séparées, triées, modifiées, et classées dans une unité centrale de traitement C,
* afin d'être transférées (liaison c) à l'automate D gérant les automatismes (81) de chargement des unités de livraison (9a, 9b), et afin de questionner le magasin de stockage (8) sur ses disponibilités en qualité et quantité d'ensembles E (liaison d),
* l'unité centrale C étant informée (liaison f) de chaque mouvement d'ensemble monté par l'automate G gérant les automatismes de stockage (81, 82), de manière à organiser en fonction desdites disponibilités la production des ensembles E nécessaires d'une part à satisfaire la livraison en synchrone dans le respect de la cartographie des unités de livraison (9a, 9b) au(x) constructeur(s), et d'autre part à la constitution du stock adapté aux livraisons futures (liaisons h et k),
* l'unité centrale C déterminant les emplacements du magasin (8) de stockage destinés à recevoir les ensembles E ainsi fabriqués, et transmettant (liaison g) les données relatives auxdits emplacements à l'automate G gérant les automatismes (82) d'approvisionnement des couloirs (80) dudit magasin (8).

## Claims

1. A production and delivery line for mounted assemblies, which each consist of a tyre P and its service wheel R, mainly comprising means (1) of routing tyres P and wheels R, means (2, 3, 4) for assembling said tyres on their wheels, means for controlling (7) and storing (8) mounted assemblies E, lines (81) and units (9) for delivery of said assemblies, **characterised in that**, in order to deliver assemblies E in sync to at least one vehicle manufacturer, it further includes a combination of computing means comprising at least:
a) a computer B making it possible to create and store a file of orders from the manufacturer(s) (link a),
b) a programmable robot D for managing the automatic loading controls of the delivery units (9) according to a stored cartography, and querying
c) a programmable robot G for management of the storage means (8), controlling the entrance and placement of the assemblies E after storage of the scheduling of said means (8) and controlling their exit to the loading lines (81) (link e),
d) a main computer C comprising, as known per se, several units, including a data input unit, a unit for storage of several files, a digital control unit carrying out several processing operations and an output unit, said computer making possible:
* the capture of data on the entrance and exit movements of the storage means (8) (link f),
* the processing of said data, as well as data processing transfers from the manufacturer(s), verifying them, modifying them and scheduling them (link b),
* the storage of said manufacturer data and data on availability of the storage means (8), as well as those on establishment of the rotating stock,
* the establishment and transmission of the filling card of the delivery units (9) (link c),
* the processing, organisation and initiation of the necessary production (links h, k),
* the scheduling of the storage means (8), and
* the transfer to the robots D managing loading and robots G managing storage means (8) (link g).

2. A production and delivery line according to Claim 1, **characterised in that** it further comprises a machine (6) for placement of heels, making it possible, by application of pressure to the sidewalls of the tyre inflated to a given pressure, to displace the heels and reposition them under the effect of the internal inflation pressure.

3. A computer management system by a system of dedicated computers and robots for the production and delivery of tyre/wheel assemblies, **characterised in that**
* the orders from the manufacturer(s) are transferred (link a) to a file in a standardised format,
* said recovered data being transmitted to (link b) and verified, separated, sorted, modified and classified in a central processing unit C,
* in order to be transferred (link c) to the robot D managing the automatic controls (81) of loading of the delivery units (9a, 9b), and in order to query the storage warehouse (8) on quality and quantity availability of assemblies E (link d),
* the central unit C being informed (link f) of each mounted assembly movement by the robot G managing the automatic storage controls (81, 82), so as to organise, according to said availability, the production of assemblies E necessary, on the one hand, to satisfy delivery in sync, respecting the cartography of the delivery units (9a, 9b), to the manufacturer(s) and, on the other, for the establishment of stock adapted to future deliveries (links h and k),
* the central unit C determining the locations of the storage warehouse (8) which are intended to receive the assemblies E thus manufactured, and transmitting (link g) the data on said locations to the robot G managing the automatic controls (82) of supply of the chutes (80) of said warehouse (8).

## Patentansprüche

1. Straße zur Herstellung und Auslieferung montierter Baugruppen E, die jeweils aus einem Reifen P und seinem Einsatzrad R zusammengesetzt sind, insbesondere mit Mitteln (1) zum Heranführen der Reifen P und der Räder R, Mitteln (2, 3, 4) zur Montage der genannten Reifen auf ihren Rädern, Steuermitteln (7) und Lagermitteln (8) für die montierten Baugruppen E sowie Strecken (81) und Einheiten (9) zur Auslieferung der genannten Baugruppen, **dadurch gekennzeichnet, daß** sie außerdem zum synchronen Ausliefern der Baugruppen E an mindestens einen Fahrzeughersteller eine Gruppe von Informationsmitteln aufweist, die zusammengesetzt sind aus mindestens:
a) einem Rechner B, der es gestattet, eine Datei von Anweisungen von dem oder den Hersteller(n) her zu erzeugen und zu speichern (Verbindung a),
b) einem programmierbaren Automaten D zum Verarbeiten der Beladungsautomatismen der Auslieferungseinheiten (9) gemäß einer gespeicherten Kartographie, und der
c) einen programmierbaren Management-Automaten G für die Lagermittel (8) abfragt, der den Eingang und die Anordnung der Baugruppen E nach Speicherung der Arbeitsvorbereitung der genannten Mittel steuert und ihren Auslauf zu den Beladungsstrecken (81) steuert (Verbindung e), und
d) einem Hauptrechner C, der, wie an sich bekannt, mehrere Einheiten aufweist, unter diesen eine Einheit zum Eintritt von Daten, eine Speichereinheit mit mehreren Dateien, eine numerische Steuereinheit, die mehrere Behandlungsoperationen bewirkt, und eine Ausgangseinheit, wobei der Rechner folgendes ermöglicht:
* Erfassen der Daten über die Eintritt- und Ausgangsbewegungen der Lagermittel (8) (Verbindung f),
* Behandeln der genannten Daten sowie Überführung zur Behandlung der Daten des bzw. der Hersteller(s), indem sie bestätigt, modifiziert und vorbereitet werden (Verbindung b),
* Speichern der genannten Herstellerdaten, der Daten bezüglich der Disponierbarkeit der Lagermittel (8) sowie dieser, die sich auf die Beschaffenheit des im Laufe befindlichen Bestandes beziehen,
* die Ausbildung und Übertragung der Karte der Füllung an die Ausliefereinheiten (9) (Verbindung c),
* die Behandlung, die Orginisation und das Auslösen der notwendigen Produktion (Verbindungen h, k),
* die Vorbereitung der Lagermittel (8), und
* die Überführung zu den Automaten für das Management der Beladung D und die Verarbeitung G der Speichermittel (8) (Verbindung g).

2. Straße zur Herstellung und Auslieferung nach Anspruch 1, **dadurch gekennzeichnet, daß** sie außerdem eine Maschine (6) zum Aufsetzen der Reifenansätze aufweist, die durch Aufbringung eines Drucks auf die Flanken des auf einen vorgegebenen Druck aufgepumpten Reifens eine Verlagerung der Ansätze und ihre erneute Positionierung unter Wirkung des inneren Aufpumdrucks gestattet.

3. System zum informatorischen Management durch ein System von Rechnern und zweckorientierten Automaten, für die Herstellung und Auslieferung von Baugruppen aus Reifen/Rad, **dadurch gekennzeichnet, daß**
* die Anweisungen vom Hersteller bzw. von den Herstellern her in eine Datei unter normalisiertem Format überführt werden (Verbindung a),
* wobei die genannten, gewonnenen Daten an eine zentrale Verarbeitungseinheit C übertragen werden (Verbindung b) und in dieser bestätigt, gesondert, sortiert, modifiziert und klassifiziert werden,
* um zum Automaten D, der die Automatismen (81) der Beladung der Auslieferungseinheiten (9a, 9b) verwaltet, überführt zu werden (Verbindung c), und um das Lagermagazin (8) über seine Disponierbarkeiten nach Qualität und Menge von Baugruppen E zu befragen (Verbindung d),
* wobei die Zentraleinheit C über jede Bewegung der montierten Baugruppe durch den Automaten G informiert wird (Verbindung f), der die Automatismen der Lagerung (81, 82) verwaltet, um auf diese Weise in Funktion von den genannten Disponierbarkeiten die Herstellung der Baugruppen E zu organisieren, die notwewndig sind, um einerseits der synchronen Lieferung in Hinblick auf die Kartographie der Liefereinheiten (9a, 9b) an den oder die Hersteller zu genügen, und um andererseits den Lagerbestand zu bilden, der für künftige Lieferungen geeignet ist (Verbindungen h und k), und
* wobei die Zentraleinheit C die Stellen des Lagermagazins (8) bestimmt, die zur Aufnahme der so hergestellten Baugruppen E bestimmt sind, und die Daten, die sich auf die genannten Stellen beziehen, an den Automaten G überträgt (Verbindung g), der die Automatismen (82) der Bereitstellung der Rutschen (80) des genannten Magazins (8) verwaltet.
